# EUROPEAN PATENT APPLICATION

(11) **EP 0 533 285 A1**
(43) Date of publication of application: **24.03.1993**
(21) Application number: 92202843.6
(22) Date of filing: 16.09.1992
(51) Int. Cl.: A01G 31/02

(54) **Active drainage system**

(30) Priority: 17.09.1991 NL 9101568; 03.02.1992 NL 9200194
(71) Applicant: Rockwool/ Grodan B.V., NL-6074 NH Melick-Herkenbosch (NL)
(72) Inventor: Deckers, Christoffel Laurentius Maria, NL-6045 BP Roermond (NL); De Groot, Jacob Frank, NL-6042 KK Roermond (NL)
(74) Representative: Prins, Hendrik Willem

(57) **Abstract**

The invention relates to an active drainage system comprising
- at least one growth substrate (3) arranged in a holder (2) and in which plants (1) can grow;
- means for adding a nutrient solution (6) to the growth substrate; and
- active drainage means which comprise a siphon hose (10) which is connected with one end to the growth substrate (3,7) and reaches with its other end into a draining pipe (14) at a level lying below the growth substrate.

## Description

The invention relates to an active drainage system. This active drainage system is intended for actively draining a growth substrate for plant culture in the simplest possible manner so that a desired moisture content prevails therein.

EP-A-300.536 describes a capillary system with which the suction pressure in a growth substrate can be adjusted. This capillary system comprises capillary elements and capillary lines which extend into the growth substrate and in which a determined suction pressure is adjustable using a pump.

The invention has for its object to provide an active drainage system with which active draining can take place as simply as possible, and the danger of disturbance thereby avoided as far as possible. This is achieved with an active drainage system according to the invention which comprises
- at least one growth substrate arranged in a holder and in which plants can grow;
- means for adding a nutrient solution to the growth substrate; and
- active drainage means which comprise a siphon hose which is connected with one end to the growth substrate and reaches with its other end into a draining pipe at a level lying below the growth substrate.

A growth substrate that can be used in the invention may consist of organic material, inorganic material and mixtures thereof. Preference is given however to an inorganic, coherent product such as a product of inorganic fibres, namely mineral fibres such as glass fibres and rockwool fibres.

The means for adding nutrient solution to the growth substrate are known from the prior art and comprise for instance drip conduits with which nutrient solution can be drip-fed onto the growth substrate at a determined frequency.

The active drainage means comprise a siphon hose with which a liquid contact is realized between the growth substrate on one side and a liquid level in the draining pipe on the other. The height difference between the growth substrate on the one hand and the water level in the draining pipe on the other determines the control range for the suction pressure in the growth substrate. This means that during feed of nutrient solution the excess nutrient solution is actively drained until an equilibrium in the suction pressure has once again reached.

In preference the siphon hose is coupled with the one end to a capillary element that is connected to the growth substrate. This capillary element is manufactured for example from a material having a suction pressure equal to or higher than the growth substrate. Thus is avoided that the capillary element dries out and it is not sufficiently certain that the siphon hose is filled with solution and can perform its siphoning action. A capillary element with a suction pressure of for example 30 cm water column is optimal when use is made of a growth substrate with a suction pressure of 15 to 25 cm water column.

In order to enable easy installing of the active drainage system and to avoid the capillary element being damaged whereby the siphoning action can take place less than optimally, it is further recommended that the capillary element is incorporated in the growth substrate and is provided with a spigot which is coupled to the one end of the siphon hose.

In order to realize the possibility of the liquid level in the draining pipe being adjustable at different heights, it is recommended that the draining pipe is provided with at least one stand pipe. If more preferably the stand pipe is provided with a telescopic pipe end, the free end of the stand pipe, which when used in a glasshouse is only that portion that protrudes above the ground, can be adjusted to the same height at all positions in the glasshouse, particularly when the collecting pipe for the siphon hoses is downward inclined.

The stand pipe is provided with a cover provided with a venting opening, whereby the stand pipe can be closed off at the top end while a liquid communication is nevertheless realized. An additional advantage is that, in the case the active drainage system is started by carrying nutrient solution under pressure via the draining pipe through the siphon hoses into the growth substrate whereby the siphoning action is brought about, a small quantity of liquid will be temporarily lost via the venting openings.

In order to enable control of the liquid level in the draining pipe, respectively in the stand pipe thereof, the draining pipe is provided with level control means, for instance in the form of a telescopic or pivotable mouthpiece of the draining pipe which reaches into the tank.

If the drainage means comprise a pump, the active drainage system according to the invention can be started up in relatively simple manner.

Mentioned and other features of the active drainage system according to the invention will be further elucidated hereinbelow on the basis of a number of embodiments given only by way of example and with reference to the annexed drawing.

In the drawing:

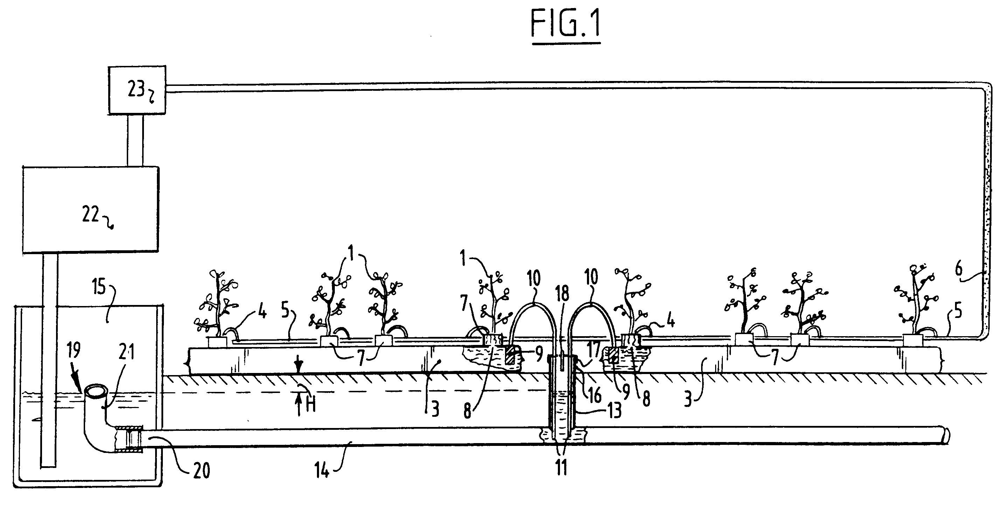

figure 1 is a schematic view of an active drainage system according to the present invention;
figure 2 is a perspective view of the active drainage system according to the invention;
figure 3 shows on a larger scale detail III in figure 2;
figure 4 shows a variant of detail IV in figure 3; and
figure 5 shows a variant of detail V in figure 4.

Plants 1 grow in a growth substrate in the form of rockwool mats 3 which are enclosed in plastic 2 and provided with nutrient solution 6 via drippers 4 which are connected to means 5 for feeding the nutrient solution. The solution 6 is added to a grow-block 7 which lies over an opening 8 arranged in the plastic 2. Placed into each grow-mat 3 is at least one capillary element in the form of a suction plug 9 which therein makes liquid contact and is connected for communication with the mineral wool of the rockwool mat 3. The suction plug 9 is manufactured from mineral wool with a density higher than that of the rockwool mat 3, whereby it has a suction pressure of for instance 30 cm water column. The suction pressure of the rockwool mat 3 amounts for instance to 20 cm water column. The suction plug 9 is connected to a siphon hose 10 having a siphoning height H. The other end 11 of the siphon hose 10 is placed in a stand pipe 13 which debouches into a draining pipe 14 which drains at a small downward inclination into a supply tank 15. At its free end 16 the stand pipe 13 is provided with a cover 17 in which a venting opening 18 of relatively small diameter is arranged so that the tank 15 and the stand pipe 13 are mutually connected for liquid communication.

The height of the water column in stand pipe 13 is adjustable with level control means 19 arranged on the end 20 of the draining pipe 14 protruding into the supply tank 15. The level control means 19 consist in this case of a pivotable pipe bend 21.

From the tank 15 the nutrient solution can be recirculated via a disinfecting unit 22 and a pump 23 and once again fed to the drippers 4 via the liquid feed means 5.

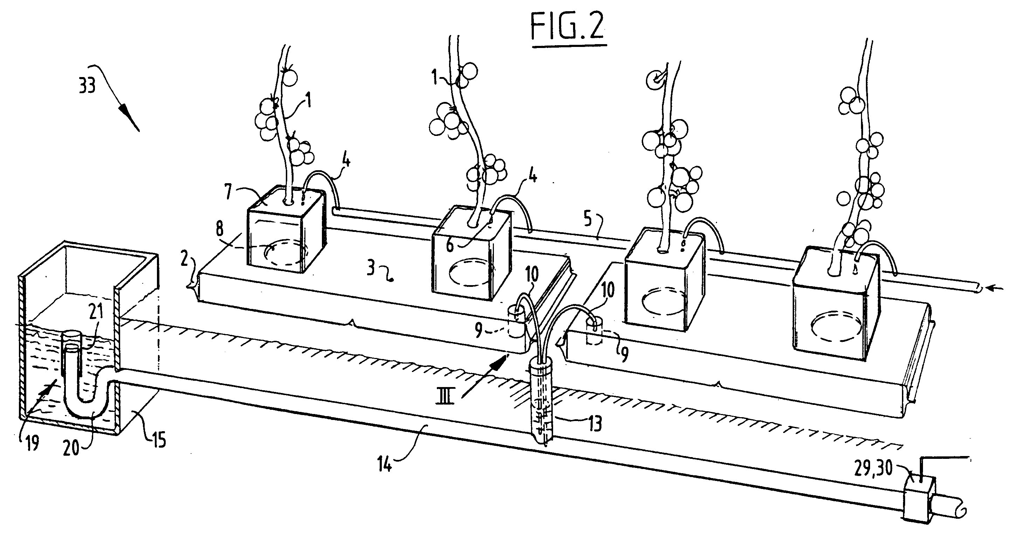

In the active drainage system 23 according to the invention shown in figure 2 the level control means 19 comprise a telescopic portion 21 on the free end 20 so that the height of the water column in each stand pipe 13 is adjustable.

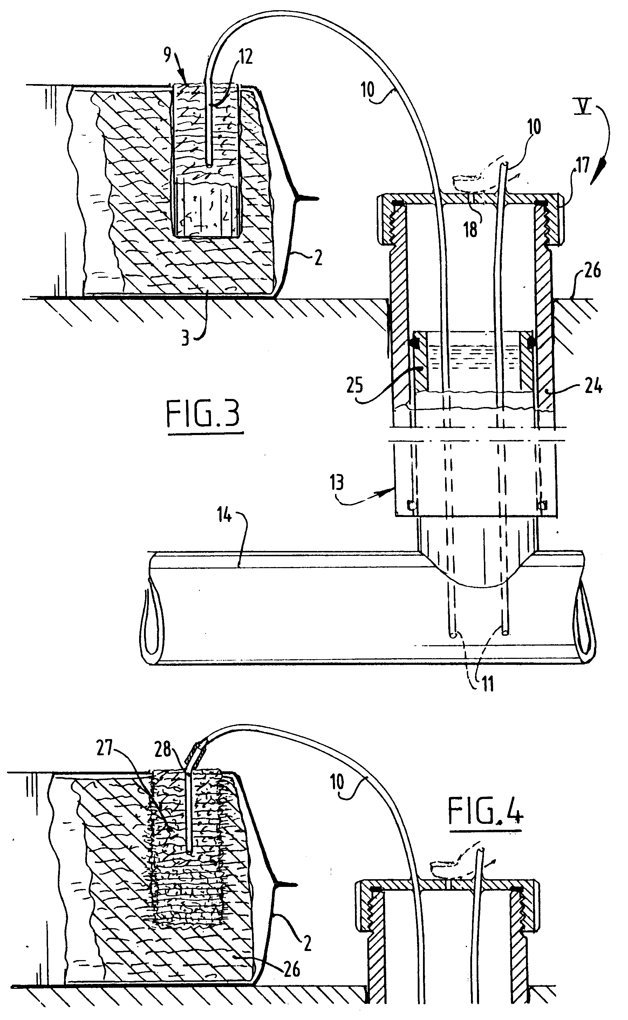

Figure 3 shows in more detail the construction of the stand pipe 13. This comprises a telescopic pipe end 24 that is slidable over a stationary stand pipe portion 25. The length of the stand pipe 13 is thus adjustable, and therewith the height to which the stand pipe with cover 17 protrudes above the ground surface 26. The form of the bend in the siphon hose 10 is also made uniformly adjustable herewith.

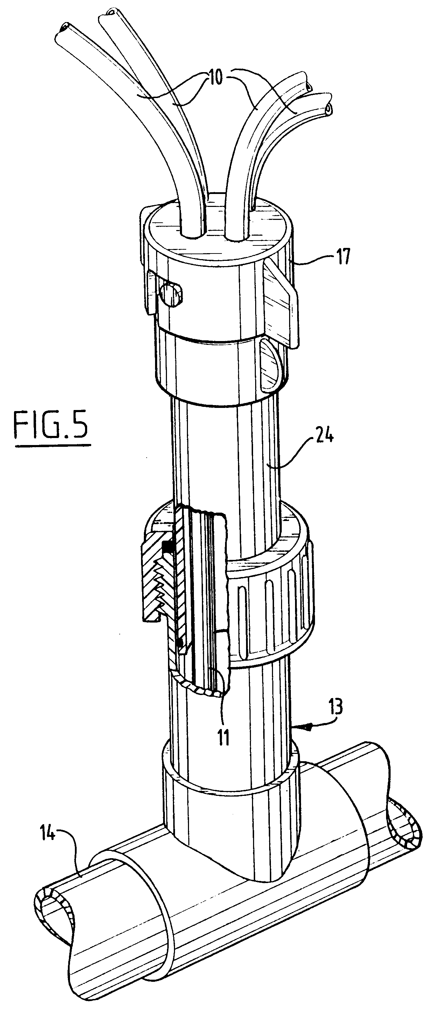

Figure 4 shows a growth substrate 26 in which a capillary element 27 is fixedly received and provided with a spigot 28. The siphon hose 10 is arranged on this spigot 28. Growth substrates 26 can thus now be supplied which are already provided in the factory with a capillary element 27, whereby the liquid connection is ensured to a greater extent. The coupling of the siphon hose 10 to the capillary element 27 is moreover easier to effect.

Figure 5 shows a variant in which the cover 17 is fastened by means of a bayonet fitting to the pipe end 24. Attachment is therefore possible with a small turning movement, whereby the siphon hoses 10 do not become mutually entangled.

The active drainage system 33 can be started as follows. After the mats 3, 26 have been filled with a nutrient solution and the suction plugs 9 arranged in the mats 3, 26, the empty draining pipe 14 to the supply tank 15 is placed using a fan 29 under an underpressure which (in cm water column) is for instance slightly greater than the siphoning height, whereby the siphon hose 10 is filled with nutrient solution from the suction plugs 9. The active drainage system is started by subsequently adjusting the level control means 19 and adjusting the feed speed of medium. The active drainage system 33 can also be started by supplying medium under pressure via the draining pipe 14, which medium under pressure flows temporarily via the siphon hose 10 towards the growth substrates 3. Medium jets temporarily via the venting opening 18 in the free end 16 of stand pipe 13 but the quantity is small and the duration short.

At the end of cultivation, all mats 3 can virtually be sucked completely empty with the active drainage system 33 but also to the moisture content corresponding with the suction pressure of the suction plug by discontinuing the medium feed and setting the level control means 19 to the lowest level.

Although not described in an embodiment, it is possible to employ the active drainage system according to the invention without making use of a capillary element. It is sufficient merely for the siphon hose 10 to be filled with water between the growth substrate 3 on one side and the liquid level in the stand pipe on the other.

## Claims

1. Active drainage system comprising
- at least one growth substrate arranged in a holder and in which plants can grow;
- means for adding a nutrient solution to the growth substrate; and
- active drainage means which comprise a siphon hose which is connected with one end to the growth substrate and reaches with its other end into a draining pipe at a level lying below the growth substrate.

2. Drainage system as claimed in claim 1, wherein the siphon hose is coupled with the one end to a capillary element that is connected to the growth substrate.

3. Drainage system as claimed in claim 2, wherein the capillary element is incorporated in the growth substrate and is provided with a spigot which is coupled to the one end of the siphon hose.

4. Drainage system as claimed in claims 1-3, wherein the draining pipe is provided with at least one stand pipe.

5. Drainage system as claimed in claim 4, wherein the stand pipe is provided with a telescopic pipe end.

6. Drainage system as claimed in claim 5, wherein the stand pipe is provided with a cover provided with a venting opening.

7. Drainage system as claimed in claim 6, wherein the cover is connected to the stand pipe via a bayonet fitting.

8. Drainage system as claimed in claims 1-7, wherein the draining pipe debouches into a tank and is provided with level control means.

9. Drainage system as claimed in claims 1-8, wherein the drainage means comprise a pump.
